# EUROPÄISCHE PATENTANMELDUNG

(11) **EP 0 570 798 A1**
(43) Veröffentlichungstag der Anmeldung: **24.11.1993**
(21) Anmeldenummer: 93107559.2
(22) Anmeldetag: 10.05.1993
(51) Int. Cl.: C08G 18/38, C08G 18/10, C09D 175/02, C04B 41/48, C09K 3/10

(54) **Verwendung von alkylthiosubstituierten aromatischen Diaminen als Härter für Polyisocyanate in Beschichtungsmitteln oder Fugenvergussmassen**

(30) Priorität: 22.05.1992 DE 4217023
(71) Anmelder: BAYER AG, 51368 Leverkusen (DE)
(72) Erfinder: Hentschel, Karl-Heinz Dr., W-5060 Bergisch Gladbach 1 (DE); Walter, Ulrich, Dipl.-Ing., W-4018 Langenfeld (DE)

(57) **Zusammenfassung**

Die Erfindung betrifft die Verwendung von mindestens einen Methylsubstituenten aufweisenden, aromatischen Diaminen, welche in ortho-Stellung zu jeder Aminogruppe mindestens einen Alkylthiosubstituenten mit 1 bis 4 Kohlenstoffatomen aufweisen, gegebenenfalls in Abmischung mit organischen Polyhydroxylverbindungen und/oder mit anderen organischen Polyaminen, als Reaktionspartner für organische Polyisocyanate in bei Raumtemperatur blasenfrei aushärtenden, lösungsmittelfreien oder -armen Zweikomponenten-Polyharnstoff-Beschichtungsmitteln oder -Fugenvergußmassen.

## Beschreibung

Die Erfindung betrifft die Verwendung von speziellen, alkylthiosubstituierten aromatischen Diaminen als Härter für organische Polyisocyanate in Zweikomponenten-Polyharnstoff-Beschichtungsmitteln oder -Fugenvergußmassen.

Baukonstruktionen aus mineralischen Baustoffen, wie Beton, Ziegelsteinen usw., sind zumeist einer Reihe schädlicher Einwirkungen ausgesetzt, welche auf Dauer die Funktionstüchtigkeit der Bauwerke erheblich beeinträchtigen können. Zu diesen Einwirkungsfaktoren sind beispielsweise das Eindringen von Wasser, Salzlösungen, flüssigen Chemikalien, sauren Atmosphärilien usw., ein Abtrag der Oberflächen durch Wettereinflüsse oder eine Abnutzung durch harten mechanischen Verschleiß (reibende oder stoßende Beanspruchung) zu zählen. Insbesondere eine Durchfeuchtung von Bauteilen trägt maßgeblich zu deren Abnutzung bei, indem die Korrosion des Baustoffs selbst oder der Bewehrungsstähle gefördert wird, wichtige Eigenschaften, wie die Druckfestigkeit, beeinträchtigt werden, ein Bewuchs mit Algen, Flechten, Pilzen usw., sowie das Ausblühen wasserlöslicher Salze, wie Salpeter usw., ermöglicht wird. Auch das Wohnklima in den Gebäuden leidet erheblich bei Durchfeuchtung der Baukonstruktion. Daher schützt man die Oberflächen der Baukonstruktionen häufig mit einem flüssigkeitsdichten und gut haftenden Überzug. Die Schutzfunktion eines Überzuges ist nur dann gegeben, wenn er sowohl eine ausreichende Elastizität (Dehnfähigkeit) als auch eine gewisse Mindestschichtdicke besitzt. In der Literatur gibt es zahlreiche Hinweise auf diese Zusammenhänge (so beispielsweise im Artikel "Rißüberbrückende Beschichtungen für mineralische Baustoffe", G. Rieche, Farbe und Lack, 85 (1979), 824 - 831). Allgemein wird gefordert, daß eine Mindestschichtdicke von 0,1 mm eingehalten werden soll. Die Dehnfähigkeit der Beschichtungen sollte im Minimum 100 % betragen. Die Schutzfunktion solcher Überzugsmaterialien wird des weiteren dann besonders lange anhalten, wenn der Weiterreißwiderstand verhältnismäßig hoch ist, umso mehr noch, wenn Witterungs- und Umgebungseinflüsse die Langzeiteigenschaften der Beschichtungsfilme nur wenig beeinträchtigen können.

Ferner ist bei der Auswahl der Überzugsmaterialien zu beachten, daß die zu beschichtenden Oberflächen im allgemeinen porös sind, und daher oft eine gewisse Menge an Wasser enthalten. Liegt in geschlossenen Räumen die sogenannte "Haushaltsfeuchte" bei ca. 3,5 % Wasser, so findet man bei Beschichtungsarbeiten im Freien häufig noch erheblich höhere Wassergehalte. Dies kann zu Problemen, insbesondere mit den Polyurethan-Beschichtungen im Sinne einer Blasenbildung durch freigesetztes Kohlendioxidgas, führen.

Die in DE-OS 3 203 490 empfohlenen Beschichtungssysteme auf Basis von NCO-Prepolymeren und diprimären, alkylsubstituierten aromatischen Diaminen haben sich als Überzugsmaterialien für die genannten Substrate zwar insofern bewährt, als sie die Herstellung von dickschichtigen, hochelastischen, rißüberbrückenden Überzügen auch auf ziemlich feuchten Substraten ohne die Bildung störender Blasen gestatten, jedoch sind die Systeme mit dem Nachteil behaltet, daß sie wegen der hohen Reaktivität der verwendeten Diamine keine ausreichende Topfzeit aufweisen. Dies kann Probleme aufwerfen, wenn die Materialien bei hohen Umgebungstemperaturen (tropische oder subtropische Klimazonen) verarbeitet werden sollen, oder wenn aus anderen Gründen eine besonders lange "offene Zeit" erwünscht ist. Ein weiterer Nachteil der hohen Reaktivität der gemäß Vorveröffentlichung eingesetzten Diamine gegenüber Polyisocyanaten besteht darin, daß die Härterkomponente stets ausschließlich aus dem Diamin und nicht aus Abmischungen des Diamins mit organischen Polyhydroxylverbindungen bestehen kann, da der Reaktivitätsunterschied zwischen dem Diamin und den Polyhydroxylverbindungen zu groß wäre, um eine homogene Umsetzung zu ermöglichen.

Grundsätzlich die gleichen Feststellungen sind im Hinblick auf die Systeme der DE-OS 3 148 838 und der US-PS 4 716 210 gerechtfertigt. Es handelt sich um schnellhärtende Zweikomponenten-Polyurethansysteme, die nur durch Gieß- oder Sprühauftrag mittels Mehrkomponenten-Dosier- und -Mischaggregaten appliziert werden können.

Es war die der Erfindung zugrundeliegende Aufgabe, neue, Zweikomponenten-Bindemittelkombinationen zur Verfügung zu stellen, die die Herstellung von Überzugsmitteln und Fugenvergußmassen gestatten, die nicht mit den Nachteilen der Systeme des Standes der Technik behaftet sind. Die neuen Systeme sollten insbesondere die Herstellung von Beschichtungsmitteln einer vergleichsweise längeren "offenen Zeit" gestatten und dennoch in Kombination mit speziellen Polyisocyanaten und in Gegenwart von Katalysatoren eine ausreichend hohe Reaktivität aufweisen, um rationell in einer gegebenenfalls erwünschten maschinellen Serienproduktion einsetzbar zu sein. Außerdem sollten die in den neuen Systemen eingesetzten Diamine auch in Kombination mit Polyhydroxylverbindungen als Härter für organische Polyisocyanate verwendbar sein, um so den Gesamtpreis des Härters durch Mitverwendung von vergleichsweise preisgünstigen Polyhydroxylverbindungen zu erniedrigen. Schließlich sollten die Systeme durch einfaches Vermischen der Einzelkomponenten herstellbar und bezüglich der mechanischen Eigenschaften der ausgehärteten Endprodukte den Systemen des Standes der Technik mindestens ebenbürtig sein.

Auch gießfähige Fugendichtstoffe ("Fugenvergußmassen") werden häufig in Bereichen eingesetzt, in welchen die reale Restfeuchte die von Polyurethanmassen in der Regel gerade noch tolerierbare "Haushaltsfeuchte" von 3,5 Gew.-% deutlich übersteigt. Eine weitere, der vorliegenden Erfindung zugrunde gelegte Aufgabe ist es daher auch, ein neues Verfahren zur Herstellung zweikomponentiger Polyurethan-Fugenvergußmassen zur Verfügung zu stellen, welches mit Sicherheit eine Blasenbildung bei hohem Feuchtigkeitsgehalt des Untergrundes im Bereich der Fugenflanken vermeidet, weitgehend ohne Lösungsmittel auskommt, nach der Aushärtung Fugenabdichtungen mit ausgezeichneten mechanischen Eigenschaften ergibt, und das eine große Variabilität der Topfzeiten zuläßt.

Diese, der Erfindung zugrundeliegenden Aufgaben konnten mit der nachstehend näher beschriebenen erfindungsgemäßen Verwendung von alkylthiosubstituierten aromatischen Diaminen als Härter oder Härterkomponente für organische Polyisocyanate in bei Raumtemperatur zu Polyharnstoffen ausreagierenden Zweikomponenten-Systemen gelöst werden.

Gegenstand der Erfindung ist die Verwendung von mindestens einen Methylsubstituenten aufweisenden, aromatischen Diaminen, welche in ortho-Stellung zu jeder Aminogruppe mindestens einen Alkylthiosubstituenten mit 1 bis 4 Kohlenstoffatomen aufweisen, gegebenenfalls in Abmischung mit organischen Polyhydroxylverbindungen und/oder mit anderen organischen Polyaminen, als Reaktionspartner für organische Polyisocyanate in bei Raumtemperatur blasenfrei aushärtenden, lösungsmittelfreien oder -armen Zweikomponenten-Polyharnstoff-Beschichtungsmitteln oder -Fugenvergußmassen.

Die erfindungswesentlichen Diamine sind in den US-Patentschriften 4 670 598, 4 751 330, 4 866 209 und 4 889 955 vorgestellt in ihren Eigenschaften und bezüglich der notwendigen Syntheseschritte. Die Synthese ist in einem Artikel von P.F. Ranken und B.G. McKinnie in J. Org. Chem. 1989, 54(12), 2985-2988, zusammengefaßt. Über die Hauptanwendungen der diprimären aromatischen Diamine geben vor allem die Artikel von C.J. Nalepa und A.A. Eisenbraun in J. Elastomers Plast. 1987, 19 (1), 6-21, sowie von C.J. Nalepa et al. in J. Elastomers Plast. 1988, 20(2), 128-142, einen breiten Überblick. Genannt wird vor allem eine Anwendung zur Herstellung von Polyurethan-Elastomeren mit verbesserter Thermostabilität und einer leichteren Anpassung an diverse Verarbeitungsbedingungen infolge einer größeren Reaktivitätsvariabilität der Aminhärter, sowie mit deutlichen Verbesserungen bezüglich Verarbeitbarkeit und Mechanik. Die in diesen Vorveröffentlichungen angesprochenen Verwendungsmöglichkeiten für die Diamine betreffen ausschließlich deren Einsatz in Kombination mit NCO-Prepolymeren in bei erhöhten Temperaturen zu elastomeren Kunststoffen auszuhärtenden Reaktionsgemischen. Demzufolge findet sich in diesen Vorveröffentlichungen keinerlei Hinweis auf die Verwendbarkeit der Diamine in bei Raumtemperatur auszuhärtenden Überzugsmitteln oder Fugenvergußmassen.

Erfindungswesentlich ist das Vorliegen eines zu Polyharnstoffen ausreagierenden Zweikomponenten-Systems, welches aus einer Polyisocyanatkomponente (i) und einer Härterkomponente (ii) besteht.

Die Art der einzusetzenden Polyisocyanatkomponente (i) richtet sich im wesentlichen nach den Hauptanforderungen, die man an die damit hergestellten Beschichtungen stellt:
A) handverarbeitbare Zweikomponenten-Besctuchtungsmaterialien mit guter Wetter- und UV-Beständigkeit, sowie relativ langen Topfzeiten oder
B) wahlweise hand- oder maschinenverarbeitbare Zweikomponenten-Beschichtungsmaterialien mit relativ kurzen Topfzeiten.

Die Polyisocyanatkomponente (i) weist einen NCO-Gehalt von 1 bis 34 Gew.-% auf. Neben der Art der NCO-Gruppen (aliphatisch bzw. aromatisch gebunden), der Art der Härterkomponente (ii) (reine erfindungswesentlichen Diamine oder Abmischungen mit Polyhydroxylverbindungen) und der an An- bzw. Abwesenheit von Katalysatoren hängt die Reaktivität der Systeme im wesentlichen auch von dem NCO-Gehalt der Komponente (i) ab. Zur Herstellung von Systemen des Typs A) kann man demzufolge durchaus auch aromatische Polyisocyanate einsetzen (beispielsweise TDI-Prepolymere), falls deren NCO-Gehalt unter 8 Gew.-% liegt. Bevorzugt weisen die Systeme des Typs A) jedoch Polyisocyanatkomponenten (i) mit ausschließlich (cyclo)aliphatisch gebundenen Isocyanatgruppen auf. Insbesondere, falls derartige Polyisocyanate (i) mit Härtern (ii) kombiniert werden, die mehr als 20 Äquivalentprozent an alkoholischen Härterkomponenten enthalten, sollte auf jeden Fall der NCO-Gehalt der Komponente (i) im Bereich von 10 bis 25 Gew.-% liegen. Bei Mitverwendung von weniger als 20 Äquivalentprozent an alkoholischen Härterkomponenten in der Komponente (ii) und bei Verwendung von (cyclo)aliphatischen Polyisocyanaten (i) sollte zur Herstellung von Systemen des Typs A) eine Polyisocyanatkomponente (i) mit einem NCO-Gehalt von 1 bis 10 Gew.-% eingesetzt werden.

Polyisocyanate (i), die zur Herstellung von Systemen des Typs A) Verwendung finden können, sind insbesondere oligomere oder prepolymere Derivate von Hexamethylendiisocyanat (HDI) oder 1-Isocyanato-3,3,5-trimethyl-5-isocyanatomethylcyclohexan, wobei auch anteilig 4,4'-Diisocyanatodicyclohexylmethan mitverwendet werden kann. Oligomere Derivate der genannten Diisocyanate sind insbesondere die als Lackpolyisocyanate bekannt gewordenen Biuret-, Isocyanurat-, Urethan-, Allophanat- und/oder Uretdiongruppen aufweisenden Modifizierungsprodukte der genannten Diisocyanate. Prepolymere Derivate sind insbesondere NCO-Prepolymere auf Basis der genannten einfachen Polyisocyanate mit organischen Polyhydroxylverbindungen, insbesondere organischen Polyetherpolyolen oder Polyesterpolyolen der aus der Polyurethanchemie an sich bekannten Art. Diese zur Herstellung der Prepolymeren geeigneten Polyhydroxylverbindungen weisen im allgemeinen ein aus Funktionalität und Hydroxylgruppengehalt errechenbares Molekulargewicht von 134 bis 8 000, vorzugsweise 600 bis 6 000 und eine Hydroxylfunktionalität von 2 bis 4, vorzugsweise von 2 bis 3 auf.

Die Herstellung der Polyetherpolyole erfolgt durch an sich bekannte Alkoxylierung von geeigneten Startermolekülen wie Wasser, Ethylenglykol, Propandiol-1,2, Trimethylolpropan, Glycerin, Pentaerythrit oder Gemischen derartiger Alkohole unter Verwendung von Propylenoxid und/oder Ethylenoxid, vorzugsweise ausschließlich Propylenoxid als Alkoxylierungsmittel. Bevorzugte Polyetherpolyole sind Polypropylenglykol und/oder propoxyliertes Trimethylolpropan des genannten Molekulargewichtsbereichs.

Zur Herstellung der Prepolymeren geeignete Polyester sind einfache Polyesterpolyole aus mehrbasischen Carbonsäuren wie beispielsweise Adipinsäure, Phthalsäure, Hexahydrophthalsäure und mehrwertigen Alkoholen der soeben beispielhaft genannten Art oder aber auch Carbonatgruppen aufweisende Polyole, wie sie durch Umsetzung von einfachen Alkoholen der beispielhaft genannten Art mit Diarylcarbonaten in an sich bekannter Weise zugänglich sind. Ferner als Polyole geeignet sind die an sich bekannten, Hydroxylgruppen aufweisenden Polymerisationsprodukte von γ-Caprolacton.

Zur Herstellung von erfindungsgemäßen Systemen des Typs A) sind, wie bereits angedeutet, auch NCO-Prepolymere auf Basis der beispielhaft genannten Polyhydroxylverbindungen und 2,4- und/oder 2,6-Diisocyanatotoluol geeignet, falls der NCO-Gehalt der Prepolymeren innerhalb der obengenannten Grenzen bleibt.

Zur Herstellung von schnellen Systemen des Typs B) geeignete Polyisocyanate sind insbesondere die an sich bekannten Polyisocyanatgemische der Diphenylmethanreihe, wie sie durch Phosgenierung von Anilin/Formaldehyd-Kondensaten in bekannter Weise zugänglich sind, und die im allgemeinen einen Gehalt an Diisocyanatodiphenylmethan-Isomeren von 40 bis 95 Gew.-% aufweisen und im übrigen aus höheren Homologen dieser Diisocyanate bestehen. Zur Herstellung von Systemen des Typs B) außerdem geeignet sind NCO-Prepolymere auf Basis von 2,4- und/oder 2,6-Diisocyanatotoluol, vorzugsweise mit einem NCO-Gehalt von 1 bis 14 Gew.-%. Anteilig mitverwendet werden können auch andere Polyisocyanate mit aromatisch gebundenen Isocyanatgruppen wie beispielsweise 1,5-Diisocyanatonaphthalin oder das durch Umsetzung von 1 Mol Trimethylolpropan mit 3 Mol 2,4-Diisocyanatotoluol zugängliche, Urethangruppen aufweisende Triiisocyanat.

Die erfindungswesentlichen diprimären aromatischen Diamine in der Reaktionspartner-Komponente (ii) tragen in ortho-Stellung zu jeder Aminogruppe mindestens einen Alkylthio-Substituenten mit 1 bis 4 Kohlenstoffatomen sowie mindestens einen Methyl-Substituenten. Die Molekülmasse dieser Diamine liegt zwischen 168 und 298. Typische Beispiele solcher aromatischen Diamine sind 1-Methyl-3-methylthio-2,4-diaminobenzol, 1 -Methyl-3,5-bis(methylthio)-2,4-diaminobenzol, 1-Methyl-3,5-bis(methylthio)-2,6-diaminobenzol, 1-Methyl-3,5-bis(ethylthio)-2,4-diaminobenzol, 1-Methyl-3,5-bis(ethylthio)-2,6-diaminobenzol, 1-Methyl-3,5-bis(butylthio)-2,4-diaminobenzol, 1-Methyl-3,5-bis(butylthio)-2,6-diaminobenzol oder beliebige Gemische derartiger Diamine. Bevorzugt ist ein unter der Bezeichnung ®Ethacure 300 handelsübliches, aus 1-Methyl-3,5-bis(methylthio)-2,4-diaminobenzol und 1-Methyl-3,5-bis(methylthio)-2,6-diaminobenzol bestehendes Diamin-Isomerengemisch (Ethyl Corporation). Zur Erzielung spezieller Eigenschaften (z.B. Strukturviskosität) kann die Reaktionspartner-Komponente (ii) der nach dem erfindungsgemäßen Verfahren eingesetzten Zweikomponenten-Überzugsmaterialien auch geringe Mengen eines weiteren diprimären, aromatischen, jedoch schwefelfreien Diamins, wie beispielsweise Gemische aus 2,6-Diethyl-1,3-diamino-4-methylbenzol und 4,6-Diethyl-1,3-diamino-2-methylbenzol, enthalten.

Daneben kann die Reaktionspartner-Komponente (ii) insgesamt bis zu 75 Äquivalentprozent, bezogen auf alle in den Gemischen vorliegenden, gegenüber Isocyanatgruppen reaktionsfähigen Gruppen, an organischen Polyhydroxylverbindungen einer (mittleren) Hydroxylfunktionalität von 2 bis 3 enthalten. Die Mitverwendung von derartigen Polyhydroxylverbindungen stellt eine unter mehreren Möglichkeiten dar, die Reaktivität des Systems und die Eigenschaften der ausgehärteten Endprodukte dem jeweiligen Bedarf optimal anzupassen.

Die Mitverwendung von alkoholischen Härterkomponenten kommt insbesondere bei der Herstellung von Systemen des Typs A) unter Verwendung von Polyisocyanaten (i) mit (cyclo)aliphatisch gebundenen Isocyanatgruppen der oben beispielhaft genannten Art in Betracht. Falls diese Polyisocyanatkomponente einen NCO-Gehalt von 10 bis 25 Gew.-% aufweist, kann die Komponente (ii) vorzugsweise einen Anteil an Polyhydroxylverbindungen von bis zu 60 Äquivalentprozent, bezogen auf die Gesamtmenge der Komponente (ii), enthalten. Falls der NCO-Gehalt der Komponente (i) unter 10 Gew.-% liegt, sollte der Anteil an alkoholischen Härterkomponenten in der Komponente (ii) nicht über 20 Äquivalentprozent liegen.

Die als Teil der Komponente (ii) in Betracht kommenden Polyhydroxylverbindungen sind vorzugsweise höhermolekulare Polyhydroxylverbindungen wie sie auch zur Herstellung der NCO-Prepolymeren eingesetzt werden können und beispielhaft oben genannt worden sind. Auch mit dispersen Polymerphasen modifizierten Polyetherpolyole, wie sie beispielsweise in DE-AS 1 260 142, 2 513 815, 2 723 293 oder US-PS 4 716 210 beschrieben werden oder auch Polybutadien-Polyole können als Teil der Komponente (ii) Verwendung finden, um gegebenenfalls erwünschte, spezielle Eigenschaften zu erzielen. In kleinen Anteilen können in der Komponente (ii) auch niedermolekulare Polyole wie Ethylenglykol, Propylenglykol, Butandiol-1,4, Hexandiol-1,6, Glycerin und/oder Trimethylolpropan mitverwendet werden.

Die erfindungswesentlichen Komponenten (i) und (ii) werden bei der Herstellung der Überzugsmittel bzw. Fugenvergußmassen vorzugsweise in solchen Mengen eingesetzt, daß das Äquivalentverhältnis von Isocyanatgruppen der Komponente (i) zu gegenüber Isocyanatgruppen reaktionsfähigen Gruppen der Komponente (ii) bei 0,8:1 bis 2,5:1 liegt, wobei über 1,2:1 liegende Äquivalentverhältnisse insbesondere dann in Betracht kommen, wenn als Komponente (i) oligomere HDI- und/oder IPDI-Derivate der genannten Art zum Einsatz gelangen.

Bei der Herstellung von Reaktivsystemen des Typs B) liegt das Äquivalentverhältnis vorzugsweise bei 0,9:1 bis 1,3:1.

Oftmals ist es zweckmäßig, den erfindungsgemäß zu verwendenden Beschichtungsmitteln (Fall A und B) außer den Bindemittelkomponenten (i) und (ii) 0,1 bis 5 Gew.-%, vorzugsweise 0,5 bis 2 Gew.-%, an organischen, vorzugsweise cycloaliphatischen Carbonsäureanhydriden, wie beispielsweise Hexahydrophthalsäureanhydrid oder Methylhexahydrophthalsäureanhydrid, zuzusetzen, um die Durchhärtungsgeschwindigkeit deutlich zu verbessern.

Die erfindungsgemäß einzusetzenden Besctuchtungsmittel können außerdem in der Beschichtungstechnologie übliche Hilfs- und Zusatzstoffe enthalten.

Obwohl der Einsatz lösungsmittelfreier Überzugsmaterialien erfindungsgemäß bevorzugt ist, können, bezogen auf das Gesamtgewicht der Beschichtungsmittel-Formulierung, bis zu 20 Gew.-%, vorzugsweise bis zu 10 Gew.-% üblicher Lacklösungsmittel, wie beispielsweise Xylol, Solventnaphtha, Butylacetat, 1-Methoxypropyl-2-acetat oder Isoparaffine, enthalten sein.

Weitere gegebenenfalls mitzuverwendende Hilfs- und Zusatzmittel sind beispielsweise Pigmente, Füllstoffe, UV-Schutzmittel, Antioxidantien, Mikrobizide, Fungizide, Algizide, Thixotropieträger, Netzmittel, Verlaufshilfsmittel, Weichmacher, Extender (Teer, Teer-Ersatzstoffe, Bitumen usw.), weitere Härtungskatalysatoren oder Entlüftungsmittel.

Die zur Herstellung der erfindungsgemäß zu verwendenden Beschichtungsmittel eingesetzten (i)- bzw. (ii)-Komponenten weisen jeweils bei 23°C eine Viskosität zwischen 0,15 und 100 Pa.s (Fall A) bzw. zwischen 0,05 und 100 Pa.s (Fall B) auf. Die Topfzeit der erfindungsgemäß zu verwendenden Beschichtungsmittel (bei 23°C) liegt bei 20 Minuten bis 10 Stunden (Fall A) und bei 20 Sekunden bis 200 Minuten (Fall B).

Sie können nach den üblichen Methoden der Beschichtungstechnologie - je nach Zusammensetzung maschinell oder manuell - zur Beschichtung beliebiger Substrate eingesetzt werden. Die bevorzugten Einsatzgebiete für die erfindungsgemäß zu verwendenden Beschichtungsmittel sind die Beschichtung oftmals feuchter mineralischer Baumaterialien, wie beispielsweise die Beschichtung von Betonkonstruktionen, Betonplatten oder von Mauerwerk, insbesondere, wenn durch die Beschichtungsmaßnahme die Verschleißfestigkeit und Chemikalienbeständigkeit der Baustoff-Oberflächen entscheidend verbessert werden können. Beispielsweise kann für den Fall A die Sanierung von Balkonen, Terrassen und Laubengängen, aber auch die Beschichtung von Kunstharz-Schaummatten für diverse Anwendungen, für den Fall B die Flächenabdichtung im Brücken-, Tunnel oder Parkhausbau, aber auch die Innenbeschichtung von Beton- oder Steingutrohren, die Ausbildung von Verschleißbelägen auf metallischen oder mineralischen Untergründen, oder die hochverschleißfeste Flächenabdichtung von Verladerampen und -rutschen, Schüttgutbehältern usw., genannt werden.

Die besonderen Vorteile der erfindungsgemäßen Systeme liegen darin, daß bei der Beschichtung derartiger feuchter mineralischer oder hochporöser flexibler Untergründe - nach entsprechender Vorbehandlung - ohne die Mitverwendung oder bei Mitverwendung nur geringer Mengen von Lösungsmitteln hochelastische und homogene, also blasenfreie, Überzüge entstehen mit guten mechanischen Eigenschaften. Im Falle A liegen die weiteren Vorzüge in einem sehr ökonomischen Einsatz der aromatischen Aminhärter und in einer auf einfache Weise in einer sehr breiten Zeitskale variierbaren Topfzeit anwendungsbereiter Formulierungen, im Falle B in einer relativ kurzen Durchhärtungszeit bei gleichzeitig guter Variierbarkeit der Topfzeit. Das erfindungsgemäße Verfahren eignet sich besonders zum Aufbringen dickschichtiger, d.h. eine Trockenfilmdicke von 0,2 bis 5 mm aufweisender, Überzüge auf den vorgenannten Substraten. Der Auftrag erfolgt auf an sich bekannte Weise per Hand durch Streichen, Rollen oder Rakeln (Fall A und Fall B/Polyisocyanate auf TDI-Basis) oder mit Hilfe spezieller Zweikomponenten-Spritz- oder -Gießapparaturen.

Die erfindungsgemäß einzusetzenden Fugenvergußmassen setzen sich analog zu den vorbeschriebenen Beschichtungsmitteln zusammen. Da Fugendichtstoffe in der Regel von Hand appliziert werden, sind jedoch solche Zusammensetzungen eindeutig bevorzugt, welche eine ausreichend lange Topfzeit aufweisen. Des weiteren unterscheiden sich Fugenvergußmassen von im Prinzip das gleiche Bindemittelsystem enthaltenden Beschichtungsmitteln vor allem in der Härte: durch gezielte Formulierung wird für eine Vergußmasse in der Regel eine Härte von Shore A 30 bis Shore A 80, bevorzugt von Shore A 40 bis Shore A 70, eingestellt.

Eine im Rahmen der Erfindung besonders bevorzugte Variante besteht darin, erfindungsgemäße Fugenvergußmassen durch einfaches Durchschütteln von gut miteinander vermischbaren Ausgangskomponenten (i) und (ii) herzustellen, wobei als Komponente (i) insbesondere Polyisocyanatgemische der Diphenylmethanreihe mit einem NCO-Gehalt von 16 bis 34, vorzugsweise 29 bis 33 Gew.-%, und als Komponente (ii) erfindungswesentliche diprimäre aromatische Diamine, gegebenenfalls in Abmischung mit bis zu 50, vorzugsweise bis maximal 40 Äquivalentprozent, bezogen auf die Gesamtmenge der Komponente (ii) an Polyetherpolyolen der oben beispielhaft genannten Art zum Einsatz gelangen. Bei diesen Polyetherpolyolen handelt es sich bevorzugt um solche mit einem Hydroxylgruppengehalt von unter 2,0, insbesondere von unter 1,5 Gew.-%.

Auch bei den erfindungsgemäß einzusetzenden Fugenvergußmassen kann es zweckmäßig sein, der Gesamtvergußmasse, bezogen auf das Gesamtgewicht der Komponenten (i) und (ii), noch 0,1 bis 5 Gew.-%, vorzugsweise 0,5 bis 2 Gew.-%, der vorstehend bereits näher charakterisierten organischen Carbonsäureanhydride zuzusetzen, um die Durchhärtungsgeschwindigkeit deutlich zu verbessern, ohne die Topfzeit der Fugenvergußmassen nachteilig zu beeinflussen.

Die erfindungsgemäß einzusetzenden Fugenvergußmassen können außerdem in der Technologie der Dichtstoffe übliche Hilfs- und Zusatzstoffe enthalten, wie zum Beispiel Lösungsmittel (unter 20, bevorzugt unter 10 Gew.-%), Weichmacher (monomer oder polymer), Pigmente, Füllstoffe, UV-Schutzmittel, Antioxidantien, biozide Additive, Netzmittel, Schaumverhütungsmittel oder Härtungskatalysatoren, wie sie für die Polyurethan-Technologie an sich bekannt sind.

Die zur Herstellung der erfindungsgemäß zu verwendenden Fugenvergußmassen eingesetzten (i)- bzw. (ii)-Komponente weisen jeweils bei 23°C eine Viskosität zwischen 0,15 und 100 Pa.s auf. Die Topfzeit der erfindungsgemäß zu verwendenen Fugenvergußmassen liegt bei 23°C bei 20 Minuten bis 10 Stunden. Für die ebenfalls erfindungsgemäß zu verwendenden Schüttelvergußmassen ist eine Viskosität jeder der beiden Komponenten bei 23°C unter 3,0, im besonderen unter 2,5 Pa.s und eine Topfzeit (ebenfalls bei 23°C) zwischen 5 und 30 Minuten zu bevorzugen.

Die erfindungsgemäßen Vergußmassen können auf übliche Weise zum Ausgießen von Bodenfugen zwischen beliebigen Substraten oder von Bodenvertiefungen oder -ausbrüchen (Fehlstellen), nach entsprechender Untergrund-Vorbehandlung, eingesetzt werden. Die bevorzugten Einsatzgebiete liegen dort, wo über eine hohe Dauerelastizität hinaus bei weitgehendem Verzicht auf den Einsatz von Schwermetall-Additiven oder Chlorparaffinen (Gewässerschutz!) noch eine gewisse Beständigkeit gegen diverse Chemikalien (milde Säuren und Basen, Mineralölderivate, "milde" Lösungsmittel und chemische Zwischenprodukte) gefordert wird. Dies kann der Fall sein im Industriebodenbereich, in Tankstellen, Raffinerien, chemischen Anlagen, insbesondere in Betonwannen oder -tassen, oder in den Bodenfügen den Bodenbelag ausmachender Betonplatten oder Formsteine. Die besonderen Vorteile der erfindungsgemäßen Systeme im Falle der Fugenvergußmassen liegt in der hohen Dauerelastizität und Chemikalienbeständigkeit und in dem Umstand begründet, daß auch bei Vorliegen feuchter Fugenflanken im Bodenbereich eine blasenfreie Durchhärtung ermöglicht wird. Die bevorzugten Einsatzgebiete der speziellen erfindungsgemäßen Vergußmassen ("Schüttelvergußmassen") liegen dort, wo im Bodenbereich von Bauwerken im Zuge von Sanierungs- oder Reparaturmaßnahmen in kürzester Zeit und mit einfachsten Mitteln horizontale (bzw. annähernd horizontale) Dehnungsfugen abgedichtet bzw. beschädigte Stellen ausgebessert werden müssen. Die Applikation der (selbstverlaufenden) erfindungsgemäßen Vergußmassen als solche erfolgt auf an sich bekannte Weise.

Mit den nachfolgenden Beispielen sollen die erfindungsgemäßen Verfahren weiter erläutert werden. Prozentangaben beziehen sich auf das Gewicht.

### Beispiele

In den nachfolgenden Beispielen werden folgende Rohstoffe eingesetzt:

### Isocyanatkomponenten

### Isocyanatkomponente A

Ein Gemisch aus Uretdion- und Isocyanuratgruppen aufweisenden Polyisocyanaten auf HDI-Basis mit 22 % NCO-Gruppen und weniger als 0,5 % freiem Hexamethylendiisocyanat. Die Viskosität liegt bei etwa 200 mPa.s (23°C).

### Isocyanatkomponente B

4000 g eines Polyetherpolyols mit einer mittleren Molmasse von 3000, der durch Propoxylierung von Trimethylolpropan erhalten wurde, werden mit 750 g 2,4-Diisocyanatotoluol versetzt und bei 100°C zu einem NCO-Prepolymeren mit einem NCO-Gehalt von 3,5 % umgesetzt. Man erhält eine Klare Flüssigkeit mit einer Viskosität von 7 Pa.s bei 23°C.

### Isocyanatkomponente C

3150 g Polypropylenglykol mit einer mittleren Molmasse von 2000 und 850 g Polypropylenglykol mit einer mittleren Molmasse von 1000 werden mit 2000 g 2,4-Diisocyanatotoluol und 500 g 2,6-Diisocyanatotoluol versetzt und bei 100°C zu einem NCO-Rohprepolymeren umgesetzt. Anschließend wird das Rohprepolymer bei einem Druck von unter 0,1 mbar und bei Temperaturen zwischen 120 und 160°C in einer Dünnschichtanlage von überschüssigem freiem Diisocyanatotoluol befreit. Man erhält eine Klare Flüssigkeit mit einem NCO-Gehalt von 4,4 %, einem Restgehalt an freiem Diisocyanatotoluol von unter 0,5 % und einer Viskosität von 6 Pa.s bei 23°C.

### Isocyanatkomponente D

Ein oligomeres MDI-Derivat, hergestellt durch Phosgenieren von Anilin/Formaldehyd-Kondensationsprodukten und partielles Abdestillieren von 4,4'-Diisocyanatodiphenylmethan. Es enthält 15 % mehrkernige MDI-Homologe und 35 bis 40 % 2,4'-Diisocyanato-diphenylmethan. Der NCO-Gehalt liegt bei 32,5 %, die Viskosität bei ca. 50 mPa.s (23°C).

### Reaktionspartner A

Eine (80:20)-Mischung der 2,4- und 2,6-Isomeren von 1-Methyl-3,5-bis(methylthio)-diaminobenzol. Viskosität bei 20°C: ca 700 mPa.s. Handelsname: ®Ethacure 300 (Ethyl Corporation).

### Reaktionspartner B

Polyesterdiol auf der Basis von Hexandiol-1,6 und ε-Hydroxycapronsäure. Hydroxylgruppengehalt: ca 1,6 %; Viskosität bei 75°C ca 1050 mPa.s. Eine bei Raumtemperatur hochviskose gelbliche Flüssigkeit.

### Reaktionspartner C

Polyetherpolyol mit einem Hydroxylgruppengehalt von 1,1 % und einer Viskosität bei 23°C von 900 mPa.s, hergestellt durch Propoxylierung von Trimethylolpropan und anschließende Ethoxylierung des Propoxylierungsprodukts (PO:EO-Gewichtsverhältnis = 86,5:13,5).

### Reaktionspartner D

Gemäß DE-AS 2 513 815 hergestellter Pfropfpolyether mit einem Hydroxylgruppengehalt von 0,85 % und einer Viskosität bei 23°C von 3300 mPa.s.

### Anwendungs- und Vergleichsbeispiele

Unter Einsatz der genannten Rohstoffe wurden die nachstehend beschriebenen Anwendungs- bzw. Vergleichsbeispiele formuliert.

### Anwendungsbeispiel 1

Diese Formulierung läßt sich sowohl als Dickbeschichtung als auch als Fugenvergußmasse mit ausreichend guter UV-Beständigkeit anwenden.

In einem Vakuumdissolver werden folgende Bestandteile homogen vermischt und als Komponente (i) oder (ii) abgefüllt:
370,5 Gew.-Teile Isocyanatkomponente A als Komponente (i); 49,5 Gew.-Teile Reaktionspartner A, 448,5 Gew.-Teile Reaktionspartner B, 3 Gew.-Teile einer 10 %igen Lösung von Dibutylzinndilaurat in Solventnaphtha, 72 Gew.-Teile einer ca. 50 %igen Paste eines Zeoliths, Porendurchmesser ca 3 Å, in Rizinusöl, 70 Gew.-Teile Neuburger Kieselerde (Agglomerat von korpuskularem Quarz und laminarem Kaolinit: "Sillitin Z", Fa Hoffmann und Söhne), 400 Gew.-Teile Schwerspat und 78 Gew.-Teile Pigment als Komponente (ii).

| | |
|---|---|
| Gehalt der Komponente (ii) an diprimärem aromatischem Diamin* | 52 Äquivalent-% |
| (NCO: [OH+NH₂])-Äquivalentverhältnis | 2,20 : 1 |
| Verarbeitungszeit bei 23°C | 50 Minuten |

| | |
|---|---|
| * Hier und im folgenden beziehen sich diese Angaben auf den Gehalt der Komponente (ii) an erfindungswesentlichem Diamin, bezogen auf die Gesamtmenge an gegenüber NCO-Gruppen reaktionsfähigen Verbindungen. | |

Eigenschaften der ausgehärteten Beschichtung (ca. 1 mm Schichtdicke):

| | |
|---|---|
| Härte | Shore D 40 |
| Reißdehnung (DIN 53504) | 121 % |
| Reißfestigkeit (DIN 53504) | 7,3 N/mm² |
| Weiterreißwiderstand (DIN 53515) | 15,5 N/mm |

Die mechanischen Eigenschaften der blasenfrei ausgehärteten Beschichtung, die UV- und wetterbeständig ist, sind als sehr gut einzustufen.

### Anwendungsbeispiel 2 (handverarbeitbare Beschichtung)

In einem Vakuumdissolver werden folgende Bestandteile homogen vermischt und als Komponente (i) oder (ii) abgefüllt:
1114,5 Gew.-Teile Isocyanatkomponente C und 10,5 Gew.-Teile Methylhexahydrophthalsäureanhydrid als Komponente (i); 120 Gew.-Teile Reaktionspartner A, 10,5 Gew.-Teile Entlüftungsmittel (Bevaloid 6420), 45 Gew.-Teile Pigment und 199,5 Gew.-Teile Schwerspat als Komponente (ii).

| | |
|---|---|
| Gehalt an B-Komponente (ii) an diprimärem aromatischem Diamin | 100 Äquivalent-% |
| (NCO:NH₂)-Äquivalentverhältnis | 1,04 : 1 |
| Verarbeitungszeit bei 23°C | 60 Minuten |

Eigenschaften der ausgehärteten Beschichtung (Schichtdicke 1,0 - 1,5 mm):

| | |
|---|---|
| Härte | Shore A 89, D 35 |
| Reißdehnung (DIN 53504) | 530 % |
| Reißfestigkeit (DIN 53504) | 22 N/mm² |
| Weiterreißwiderstand (DIN 53515) | 60 N/mm |

Die mechanischen Eigenschaften der blasenfrei ausgehärteten dickschichtigen Test-Filme können demnach als ausgezeichnet eingestuft werden.

### Anwendungsbeispiel 3 (handverarbeitbare Beschichtung)

Diese Variante des Anwendungsbeispiels 2 belegt die leichte Veränderbarkeit der Aushärtekinetik durch einfache Variation der Grundrezepturen.

Mit Ausnahme des Anteiles an Methylhexahydrophthalsäureanhydrid, welcher weggelassen wurde, wird die Rezeptur des Anwendungsbeispiels 2 übernommen.

Während die mechanischen Eigenschaften der Testfilme im wesentlichen unverändert bleiben, verlängert sich die Verarbeitungszeit bei 23°C auf 90 Minuten.

### Anwendungsbeispiel 4 (handverarbeitbare Beschichtung)

In einem Vakuumdissolver werden folgende Bestandteile homogen vermischt und als Komponente (i) oder (ii) abgefüllt:
1114,5 Gew.-Teile Isocyanatkomponente B und 10,5 Gew.-Teile Methylhexahydrophthalsäureanhydrid als Komponente (i); 105 Gew.-Teile Reaktionspartner A, 10,5 Gew.-Teile Entlüftungsmittel (Bevaloid 6420), 45 Gew.-Teile Pigment und 214,5 Gew.-Teile Schwerspat als Komponente (ii).

| | |
|---|---|
| Gehalt der Komponente (ii) an diprimärem aromatischem Diamin | 100 Äquivalent-% |
| (NCO:NH₂)-Äquivalentverhältnis | 0,95 : 1 |
| Verarbeitungszeit bei 23°C | 60 Minuten |

Eigenschaften der ausgehärteten Beschichtung (Schichtdicke 1,0 - 1,5 mm):

| | |
|---|---|
| Härte | Shore A 83, D 30 |
| Reißdehnung (DIN 53504) | 420 % |
| Reißfestigkeit (DIN 53504) | 7,4 N/mm² |
| Weiterreißwiderstand (DIN 53515) | 19,0 N/mm |

### Anwendungsbeispiel 5 (handverarbeitbare Beschichtung)

Mit Ausnahme des Anteils an Methylhexahydrophthalsäureanhydrid, welcher weggelassen wurde, wird die Rezeptur des Anwendungsbeispiels 4 übernommen.

Während die mechanischen Eigenschaften der Testfilme im wesentlichen unveränden bleiben, verlängert sich die Verarbeitungszeit bei 23°C auf 90 Minuten.

### Anwendungsbeispiel 6 (handverarbeitbare Beschichtung)

In einem Vakuumdissolver werden folgende Bestandteile homogen vermischt und als Komponente (i) oder (ii) abgefüllt:
1117,5 Gew.-Teile Isocyanatkomponente C und 7,5 Gew.-Teile Methylhexahydrophthalsäureanhydrid als Komponente (i); 90 Gew.-Teile Reaktionspartner A, 30 Gew.-Teile eines Phenyl-alkylsulfonat-Weichmachers (®Mesamoll, Bayer AG), 10,5 Gew.-Teile Entlüftungsmittel (Bevaloid 6420), 45 Gew.-Teile Pigment, 3 Gew.-Teile einer pyrogenen Kieselerde mit geringem Wassergehalt (Cab-O-sil TS 720), Cabot) und 196,5 Gew.-Teile Schwerspat als Komponente (ii).

| | |
|---|---|
| Gehalt der Komponente (ii) an diprimärem aromatischem Diamin | 100 Äquivalent-% |
| (NCO:NH₂)-Äquivalentverhältnis | 1,4 : 1 |
| Verarbeitungszeit bei 23°C | 90 Minuten |

Eigenschaften der ausgehärteten Beschichtung (Schichtdicke 1,0 - 1,5 mm):

| | |
|---|---|
| Härte | Shore A 80 |
| Reißdehnung (DIN 53504) | 540 % |
| Reißfestigkeit (DIN 53504) | 18,0 N/mm² |
| Weiterreißwiderstand (DIN 53515) | 40,0 N/mm |

Die mechanischen Eigenschaften der blasenfrei ausgehärteten dickschichtigen Testfilme können demnach als ausgezeichnet eingestuft werden.

### Anwendungsbeispiel 7 (handverarbeitbare Beschichtung)

In einem Vakuumdissolver werden folgende Bestandteile homogen vermischt und als Komponente (i) oder (ii) abgefüllt:
Komponente (i) ist mit der des Anwendungsbeispiels 6 identisch; 60 Gew.-Teile Reaktionspartner A, 60 Gew.-Teile eines Phenylalkyl-sulfonat-Weichmachers (®Mesamoll, Bayer AG), 10,5 Gew.-Teile Entlüftungsmittel (Bevaloid 6420), 45 Gew.-Teile Pigment, 3 Gew.-Teile einer pyrogenen Kieselerde mit geringem Wassergehalt (Cab-O-sil TS 720, Cabot) und 196,5 Gew.-Teile Schwerspat als Komponente (ii).

| | |
|---|---|
| Gehalt der B-Komponente (ii) an diprimärem aromatischem Diamin | 100 Äquivalent-% |
| (NCO:NH₂)-Äquivalentverhältnis | 2,1 : 1 |
| Verarbeitungszeit bei 23°C | 150 Minuten |

Eigenschaften der ausgehärteten Beschichtung (Schichtdicke 1,0 - 1,5 mm):

| | |
|---|---|
| Härte | Shore A 60 |
| Reißdehnung (DIN 53504) | 650 % |
| Reißfestigkeit (DIN 53504) | 17,0 N/mm² |
| Weiterreißwiderstand (DIN 53515) | 34,0 N/mm |

Die mechanischen Eigenschaften der blasenfrei ausgehärteten dickschichtigen Testfilme können demnach als ausgezeichnet eingestuft werden.

### Vergleichsbeispiel 1 (Verwendung eines nichterfindungsgemäßen Diamins)

Das Anwendungsbeispiel 2 wurde dahingehend abgewandelt, daß anstelle der 120 Gew.-Teile Reaktionspartner A (in Komponente (ii)) vielmehr 146 Gew.-Teile einer 67 %igen Lösung eines (2:1)-Gemisches der 2,4- und 2,6-Isomeren von 1-Methyl-3,5-diethyl-diaminobenzol in Propylencarbonat (4-Methyl-1,3-dioxolan-2-on) eingesetzt wurde. Das (NCO:NH₂)-Äquivalentverhältnis ist mit dem des Anwendungsbeispiels 2 identisch.

Es wird eine Verarbeitungszeit von nur ca. 400 Sekunden gefunden.

### Anwendungsbeispiel 8 (maschinell zu verarbeitende Beschichtung)

In einem Vakuumdissolver werden folgende Bestandteile homogen vermischt und als Komponente (i) oder (ii) abgefüllt:
289,5 Gew.-Teile Isocyanatkomponente D und 210 Gew.-Teile Reaktionspartner B zu Komponente (i) (durch Vorreaktion im Gebinde sinkt der NCO-Gehalt von 18,8 auf 17,2 %); 827 Gew.-Teile Reaktionspartner B, 114 Gew.-Teile Reaktionspartner A, 57 Gew.-Teile einer ca. 50 %igen Paste eines Zeoliths, Porendurchmesser ca. 3 Å, in Rizinusöl, und 4,5 Gew.-Teile Dibutylzinndilaurat zu Komponente (ii).

| | |
|---|---|
| Gehalt der B-Komponente (ii) an diprimärem aromatischem Diamin | 58 Äquivalent-% |
| (NCO:[OH+NH₂])-Äquivalentvehältnis | 1,11 : 1 |

Das Material wird mit Hilfe einer Zweikomponenten-Airlesspritzanlage, vorgewärmt auf 70°C, verspritzt zu einer Schichtdicke von ca 1,5 mm. Das Potlife liegt dabei unter 1 Minute. Die resultierenden Spritzbeschichtungen, die nach ca 30 Minuten ihre Oberflächenklebrigkeit (Tack) verlieren, weisen folgende mechanische Endeigenschaften auf:

| | |
|---|---|
| Härte | Shore A 80, D 30 |
| Reißdehnung (DIN 53504) | 300 % |
| Reißfestigkeit (DIN 53504) | 20,0 N/mm² |
| Weiterreißwiderstand (DIN 53515) | 31,0 N/mm |

Dieses Eigenschaftsniveau liegt für gespritzte, dickschichtige elastische Abdichtungen sehr hoch. An einer, durch maschinelles Zweikomponenten-Vergießen gewonnenen, weiteren Probe des Anwendungsbeispiels 8 findet man bei Durchführung eines Testes zur Bestimmung des Abrasionsverschleißwiderstandes nach DIN 53516 einen außerordentlich guten Wert: 35 mm³.

### Anwendungsbeispiel 9 (maschinell zu verarbeitende Beschichtung)

20 000 Gew.-Teile eines MDI-Prepolymeren mit einem NCO-Gehalt von 8,6 % und einer Viskositat bei 23°C von 3,1 Pa.s auf Basis eines MDI-Gemisches aus 65 % 2,4'-und 35 % 4,4'-Diisocyanatodiphenylmethan und einem Polypropylenglykol des Molekulargewichts 4 000 als Komponente (i) und 3600 Gew.-Teile Reaktionspartner A als Komponente (ii) werden auf 50°C erhitzt und mit Hilfe einer Zweikomponenten-Mischanlage vergossen zu einem dickschichtigen Belag einer Schichtdicke von ca 2 mm.

| | |
|---|---|
| Gehalt der B-Komponente (ii) an diprimärem aromatischem Diamin | 100 Äquivalent-% |
| (NCO:NH₂)-Äquivalentverhältnis | 1,22 : 1 |
| Potlife | 1 Minute |

Eigenschaften der ausgehärteten Dickschicht-Beläge:

| | |
|---|---|
| Härte | Shore A 95, D 45 |
| Reißdehnung (DIN 53504) | 95 % |
| Reißfestigkeit (DIN 53504) | 8,0 N/mm² |
| Weiterreißwiderstand (DIN 53515) | 62,0 N/mm |

Für eine maschinell zu applizierende Flächenabdichtung sind die mechanischen Eigenschaften demnach als durchaus gut einzustufen.

### Anwendungsbeispiel 10 (Schüttelvergußmasse)

In einem Dissolver wird die Komponente (i) gefertigt durch Vermischen von 680 Gew.-Teilen Isocyanatkomponente D mit 20 Gew.-Teilen einer Paste, bestehend aus speziellen Pigmenten und Butylbenzylphthalat als Weichmacher, die Komponente (ii), ebenfalls in einem Dissolver, durch Vermischen von 1400 Gew.-Teilen Reaktionspartner C, 1360 Gew.-Teilen Reaktionspartner D, 300 Gew.-Teilen Reaktionspartner A, 140 Gew.-Teilen einer ca. 50 %igen Paste eines Zeoliths, Porendurchmesser ca. 3 Å, in Rizinusöl, 120 Gew.-Teilen einer Paste, bestehend aus speziellen Pigmenten und Butylbenzylphthalat als Weichmacher, 20 Gew.-Teilen Entlüftungsmittel (Bevaloid 6420), 60 Gew.-Teilen einer 10 %igen Lösung von Dibutylzinndilaurat in einem aromatischen Kohlenwasserstoff und 1000 Gew.-Teilen eines Phosphatester-Weichmachers (®Disflamoll TOF; Bayer AG).

Charakteristische Eigenschaften der Schüttelvergußmasse:

| | |
|---|---|
| Gehalt der B-Komponente (ii) an diprimärem aromatischem Diamin | 64 Äquivalent-% |
| (NCO:[OH+NH₂])-Äquivalentverhältnis | 1,2 : 1 |
| Verarbeitungszeit bei 23°C | 15 Minuten |
| Potlife bei 23°C | 20 Minuten |
| Viskosität der Komponente (i) bei 23°C | ca. 50 mPa.s |
| Viskosität der Komponente (ii) bei 23°C | ca. 2000 mPa.s |

Eigenschaften der ausgehärteten Schüttelvergußmasse:

| | |
|---|---|
| Härte | Shore A 67 |
| Reißdehnung (DIN 53504) | 220 % |
| Reißfestigkeit (DIN 53504) | 6,5 N/mm² |
| Weiterreißwiderstand (DIN 53515) | 7,5 N/mm |

Dieses Beispiel belegt die hervorragende Eignung der erfindungsgemäßen Spezialvergußmassen für einen praktischen Einsatz.

## Patentansprüche

1. Verwendung von mindestens einen Methylsubstituenten aufweisenden, aromatischen Diaminen, welche in ortho-Stellung zu jeder Aminogruppe mindestens einen Alkylthiosubstituenten mit 1 bis 4 Kohlenstoffatomen aufweisen, gegebenenfalls in Abmischung mit organischen Polyhydroxylverbindungen und/oder mit anderen organischen Polyaminen, als Reaktionspartner für organische Polyisocyanate in bei Raumtemperatur blasenfrei aushärtenden, lösungsmittelfreien oder -armen Zweikomponenten-Polyharnstoff-Beschichtungsmitteln oder -Fugenvergußmassen.

2. Verwendung gemäß Anspruch 1, dadurch gekennzeichnet, daß die die aromatischen Diamine enthaltende Reaktionspartner-Komponente zumindest zu 20 Äquivalentprozent, bezogen auf die gegenüber Isocyanatgruppen reaktionsfähigen Gruppen, aus diprimären, in ortho-Stellung zu jeder Aminogruppe alkylthiosubstituierten aromatischen Diaminen besteht und die Mengenverhältnisse der Polyisocyanatkomponente zu der Reaktionspartner-Komponente einem NCO/OH-Äquivalentverhältnis von 0,8:1 bis 2,5:1 entsprechen.

3. Verwendung gemaß Anspruch 1 und 2, dadurch gekennzeichnet, daß die Polyisocyanatkomponente einen NCO-Gehalt von 1 bis 34 Gew.-% aufweist und aus mindestens einem organischen Polyisocyanat, ausgewählt aus der Gruppe bestehend aus (i) Di- und/oder Polyisocyanaten der Diphenylmethanreihe, (ii) freie Isocyanatgruppen aufweisenden Prepolymeren auf Basis von 2,4- und/oder 2,6-Diisocyanatotoluol und (iii) Biuret-, Isocyanurat-, Urethan-, Allophanat- und/oder Uretdiongruppen aufweisenden Lackpolyisocyanaten auf Basis von Hexamethylendiisocyanat und/oder 1-Isocyanat-3,3,5-trimethyl-5-isocyanatomethylcyclohexan, besteht.

4. Verwendung gemäß Anspruch 1 bis 3, dadurch gekennzeichnet, daß die Beschichtungsmittel oder Fugenvergußmassen die in der Beschichtungs- bzw. Dichtstofftechnologie üblichen Hilfs- und Zusatzstoffe enthalten.

5. Verwendung gemäß Anspruch 1 bis 4, dadurch gekennzeichnet, daß man als diprimäre aromatische Diamine 1-Methyl-3,5-bis(methylthio)-2,4-diaminobenzol und/oder 1-Methyl-3,5-bis(methylthio)-2,6-diaminobenzol verwendet.
